# EUROPEAN PATENT SPECIFICATION

(11) **EP 2 229 809 B1**
(45) Date of publication and mention of the grant of the patent: **11.01.2017**
(21) Application number: 09008138.1
(22) Date of filing: 22.06.2009
(51) Int. Cl.: A01D 34/62

(54) **Reel mower**
Spindelmäher
Tondeuse à tambour

(30) Priority: 14.05.2009 US 466289; 20.03.2009 US 210552 P
(43) Date of publication of application: 22.09.2010
(73) Proprietor: Fiskars Brands, Inc., Madison, WI 53718 (US)
(72) Inventor: Vaughan, David L., Cross Plains WI 53528 (US); Roelke, Scott, Arena Wisconsin 53503 (US)
(74) Representative: Uexküll & Stolberg

(56) References cited:
- WO-A1-92/12352
- US-A- 4 345 419
- US-A- 4 663 924
- US-A- 5 170 613

## Description

### CROSS-REFERENCE TO RELATED PATENT APPLICATIONS

This application claims priority from US Provisional Application 61/210,552, filed 3/20/2009, incorporated herein by reference in its entirety.

### FIELD

The present invention relates to a lawnmower. The present invention relates more particularly to a lawnmower of the reel type ("reel mower"). The present invention relates more particularly to a reel mower having a non-contact cutting blade system. The present invention relates still more particularly to a reel mower having a cutting blade reel with high rotational inertial properties, and an adjustment system for setting a gap or clearance between the cutting blades of the reel and a fixed cutting edge of the mower.

### BACKGROUND

This section is intended to provide a background or context to the invention recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

One type of reel mower is typically referred to as a "contact" type reel mower, which operates with contact between the reel blades and the fixed cutting edge of the mower (often referred to as a "bedknife") to sever grass by a contact shearing or scraping operation of the blades. Another type of reel mower is typically referred to as a "non-contact" type reel mower, which tend to be quieter and operates with a small gap between the reel cutting blades and the bedknife to avoid contact and to sever the grass by using a sharper edge against the resistance of the grass. One distinction between the non-contact type reel mowers and the contact type reel mowers is the hardness of the cutting blades. In a non-contact mower, the reel and bedknife blades are often heat-treated to a substantially higher hardness to provide a sharper edge than in a contact type mower. For example, a contact mower may have cutting blades hardened to approximately 20 Rockwell C, while the cutting blades of a non-contact type mower may be above 40 Rockwell C. Optimizing the cutting performance of a non-contact type mower involves carefully setting and maintaining the small gap between the reel cutting blades and the bedknife. A certain degree of precision is typically required in setting the gap; if the gap is too large, than the cutting performance is compromised, and if the gap is too small, the reel cutting blades and the bedknife with their high level of hardness may damage (e.g. chip, abrade, etc.) one another. Conventional devices for setting the cutting gap in non-contact type reel mowers tend to be complicated, inaccurate, and difficult to use, often resulting in improper setting of the gap and poor performance of the mower (e.g. mowers that either do not cut well, are difficult to push, or both). Some conventional mowers have attempted to simplify the adjustment process, but still typically require the user to access the bottom of the mower and/or use mechanic's tools, both of which tend to discourage regular and necessary adjustment.

Also, the rotational inertia of the cutting blade reel can effect the performance of a non-contact reel mower. For example, a cutting blade reel with low rotational inertia tends to stall or jam when encountering items that are more difficult to cut than grass, such as weeds, crabgrass, sticks, mulch and the like. However, typical cutting blade reels that attempted to increase rotational inertia by making the cutting blade wider also tend to increase aerodynamic drag and wind resistance, resulting in a level of performance that is less than desired.

Accordingly, it would be desirable to provide an improved non-contact type reel mower, having a cutting blade reel with high rotational inertia packaged in a standard size mower, and a cutting gap adjustment system that is top-mounted for accessibility and moves the position of the reel relative to a stationary bedknife for setting the gap of the mower with the bedknife forming a structural portion of the mower.

US 4, 345,419 discloses a reel mower (see figure 1) with a frame (12), a reel (30) having an axle (28), a plurality of blades (32) helically disposed about the axis at a radial distance from the axis and one blade support member coupling the blades to the axle; a bedknife (20), the bedknife mounted to the frame (12); and an adjustment system (10) configured to move the reel relative to the bedknife, the adjustment system including a first reel carrier plate (18 left) and a second reel carrier plate (18 right) each having a first portion pivotally coupled to the frame (pivot 38), and a second portion rotatably supporting the axle (28), and a third portion having an adjustment device (26, 24, 22) configured to couple the third portion of the carrier plates to the frame.

### SUMMARY

This invention relates to a reel mower as claimed in Claim 1.

According to one embodiment, a reel mower includes a reel having a high rotational inertia. The reel includes an axle, a plurality of blades helically disposed about the axis at a radial distance from the axis, and a blade support member coupling the blades to the axle, in a manner that locates a majority of the mass of the reel at a location as far from the axle as possible, while still fitting within the size constraints of a standard size mower package. The reel has a diameter of approximately 175 mm and a length of approximately 460 mm, and the blades have a thickness of 4.5 mm and a width of approximately 30 mm wide.

According to another embodiment, a cutting gap adjustment system for a reel mower includes generally parallel carrier plates having a forward end pivotally coupled at a forward end of the mower, and a mid portion that supports or carries the reel and a rearward end that is operably coupled to a chassis of the mower by an adjustment device. The plates operate as levers pivoting about the pivot points to raise and lower the reel relative to a fixed bedknife to adjust a gap between the reel and the bedknife when the adjustment device is actuated to raise or lower the rearward end of the plates. Location of the reel proximate the mid portion of the plates permits a relatively small amount of gap adjustment that corresponds to a relatively large amount of movement of the adjustment device. The adjustment device extends upwardly from the chassis to permit actuation by a user from the top of the mower. Adjusting the gap by moving the reel relative to a stationary bedknife, permits the bedknife to also serve as a structural member for the chassis of the mower.

### BRIEF DESCRIPTION OF THE DRAWINGS

FIGURE 1 is a graphic image of a perspective view of a non-contact type reel mower with a high rotational inertia reel and a cutting gap adjustment system, according to an exemplary embodiment.
FIGURE 2 is a graphic image of a side elevation view of a non-contact type reel mower with a high rotational inertia reel and a cutting gap adjustment system, according to an exemplary embodiment.
FIGURE 3 is a graphic image of a perspective view of a cutting blade reel with a high rotational inertia for a reel mower, according to an exemplary embodiment.
FIGURE 4 is a graphic image of a side elevation view of a cutting blade reel with a high rotational inertia for a reel mower, according to an exemplary embodiment.
FIGURE 5 is a graphic image of a perspective view of a cutting blade reel with a high rotational inertia for a reel mower, according to another exemplary embodiment.
FIGURE 6 is a schematic image of a side elevation view of a cutting blade reel and a bedknife interface for a non-contact type reel mower, according to an exemplary embodiment.
FIGURE 7 is a schematic image of a perspective view of a non-contact type reel mower with a high rotational inertia reel and a cutting gap adjustment system, according to an exemplary embodiment.
FIGURE 8 is a schematic diagram of a side elevation view of a pivot and lever arrangement for a cutting gap adjustment system of a non-contact type reel mower, according to an exemplary embodiment.

### DETAILED DESCRIPTION

Referring to the FIGURES, a reel mower 10 is disclosed having a cutting blade reel 30 with a high polar moment of inertia, and a cutting gap adjustment system 50 for setting a gap or clearance between the cutting blades of the reel and a fixed cutting edge of the reel mower, according to an exemplary embodiment.

Although specific examples are shown and described throughout this disclosure, the embodiments illustrated in the FIGURES are shown by way of example, and any of a wide variety of other configurations, shapes, sizes and locations of components, and combinations thereof, will be readily apparent to a person of ordinary skill in the art after reviewing this disclosure. Further, although the reel mower has been shown and described by way of example for a non-contact type mower, the elements and features of the invention are capable of use in other lawn mowing applications. All such variations of the high inertial reel and the cutting gap adjustment system are intended to be within the scope of the invention.

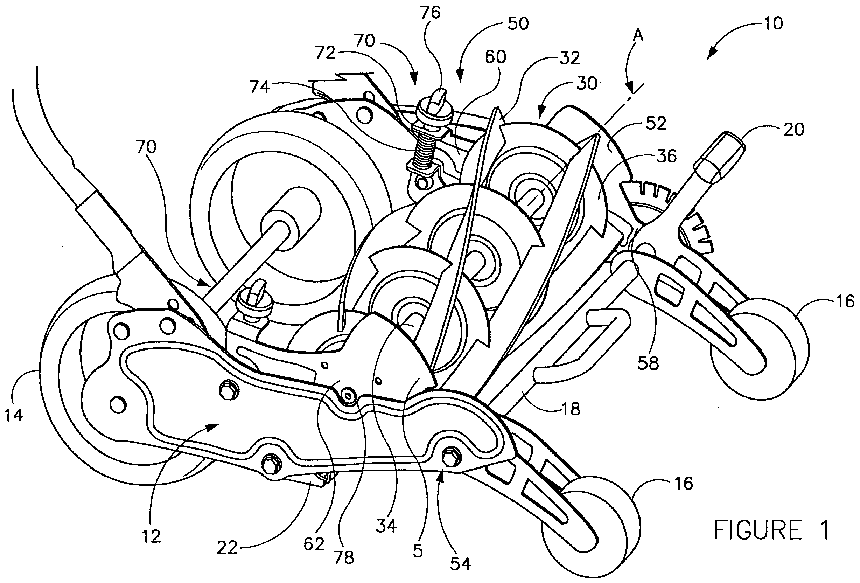

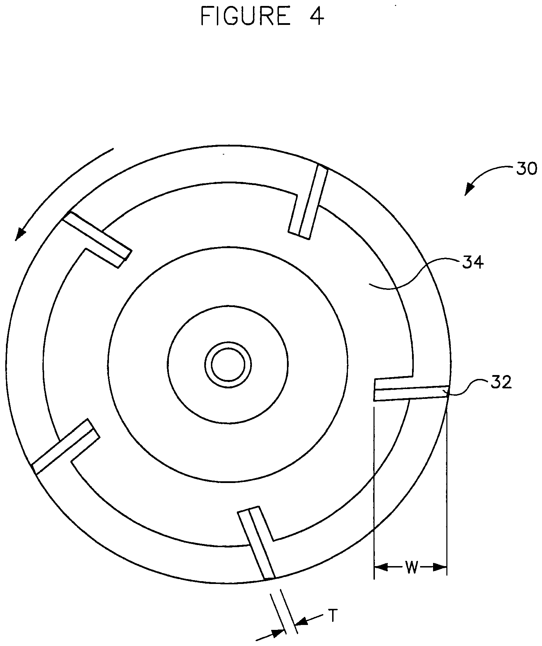

Referring to FIGURES 1-8, a non-contact type reel mower 10 with a high rotational inertia cutting blade reel 30 and a cutting gap adjustment system 50 is shown according to an exemplary embodiment. The reel mower 10 includes a main chassis 12 with rear drive wheels 14 located rearward on the chassis 12 and smaller height-adjustment front wheels 16 are located forward on the chassis 12 (often referred to as a front-mount or front-throw reel mower). The front wheels 16 are interconnected by a cross member 18 so that the cutting elevation of the reel mower may be raised or lowered by adjusting a single handle 20 to effect an elevation change of both front wheels 16. The cutting blade reel 30 is shown located forward of (i.e. in front of) the large rear drive wheels 14 and is driven by a chain and sprocket system from the rear wheels (not shown for clarity). A fixed cutting blade (referred to herein as a bedknife 22) is mounted to the chassis 12 and positioned to interface with the rotating cutting blades 32 of the reel 30 through a small gap 24 to provide a non-contact shearing relationship.

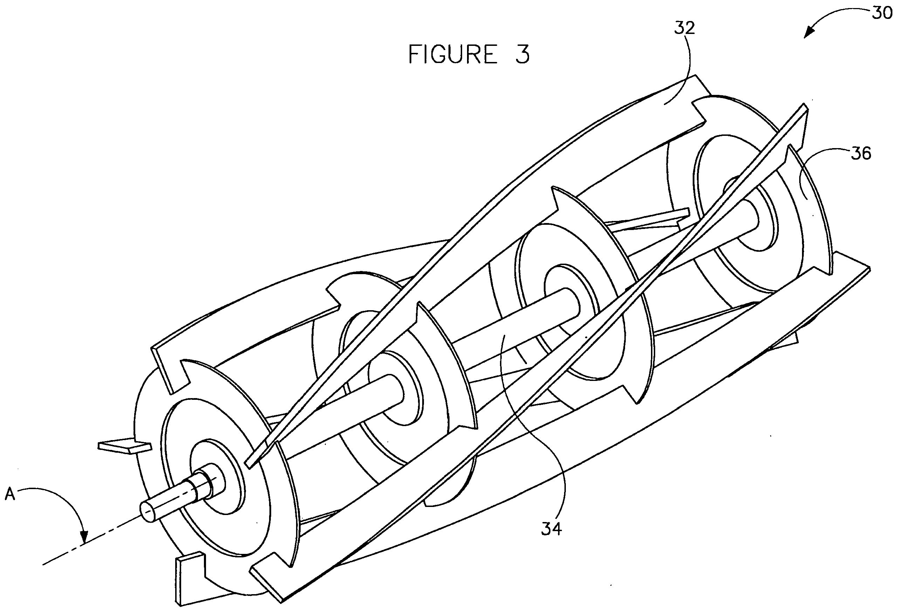

Referring more particularly to FIGURES 3-6, a cutting blade reel 30 having high rotational inertia is disclosed to increase the momentum of the reel and provide stored energy storage that can assist in cutting through difficult items (e.g. weeds, crabgrass, sticks, mulch, etc.), according to an exemplary embodiment. The cutting blade reel 30 as shown is intended to have a large rotational inertia, thus providing more momentum than conventional reels, and because of the application in a non-contact type mower, this additional momentum is available to assist in cutting during momentary high loads, such as hitting weeds, a thick clump of grass, small branches and the like. Such a high rotational inertia cutting blade reel is intended to provide an advantageous improvement over conventional cutting blade reels that tend to include a flywheel or other separate component to increase the momentum of the cutting blades.

Reel 30, according to the illustrated embodiment, concentrates mass away from the axis of rotation "A" to increase the rotational moment of inertia of the cutting blade reel 30. According to the illustrated embodiment of the mower 10, the rotational inertia of the reel 30 depends on at least several primary factors, including the length and diameter of the reel 30 and the mass of the blades 32. According to one embodiment, the reel 30 has a diameter of approximately 175 mm, and the blades 32 have a thickness "T" of 4.5 mm and a width "W" of approximately 30 mm wide, which are intended to place much of the reel's mass outward from the central axle 34 (and the corresponding axis of rotation A). For example, in standard size reel mower applications having a reel length (i.e. cutting width) of approximately 460 mm, the resulting moment of inertia about the axis of rotation A of the reel 30 is at least 5,000,000 g*mm2, more preferably approximately 10,000,000 g*mm2, more preferably still approximately 15,983,633 g*mm2. The Applicants believe that this result is approximately five times greater than the typical rotational inertia of most conventional cutting blade reels.

Since a contact type reel mower with a high reel inertia tends to lose its momentum due to friction between the reel cutting blades and the bedknife, the Applicants have developed a reel that is more "dense" in rotational inertia, yet is still contained within the size constraints of a standard size mower, and that uses a non-contact cutting system to allow the reel to spin more freely.

According to the exemplary embodiment, the blade 32 has an increased thickness "T" (i.e. the circumferential dimension) and a reduced width "W" (i.e. the radial dimension), in order to concentrate the mass of the cutting blades 32 as far from the axis of rotation A as possible and to reduce aerodynamic drag and wind resistance of the cutting blades 32 as they rotate about the axis of rotation A of the reel 30. According to one embodiment, the cutting blades 32 of the reel 30 are made from hardened steel to provide the desired sharpness of the cutting edge of the blades 32 to avoid 'crushing' the cut grass against the bedknife 22. For example, the blades are shown to have a cutting edge formed by the intersection of flat width of the blade and the circumferential edge made by a cylindrical grinding operation, while a relief is provided to reduce the thickness of the blade at the cutting surface to reduce 'crushing' of the grass clippings and thereby reducing the force necessary to spin the reel. The cutting edge may be ground in, or rolled into, the sheet metal shape of the blade 32. However, according to alternative embodiments, a heavier material (e.g. lead, etc.) may be used and provided with a steel or ceramic cutting edge. Also, weights of a higher-density material (e.g. lead, etc.) may be added to steel cutting blades to increase mass without increasing the width W of the blade.

The reel also includes blade support members (e.g. disks, etc., referred to further herein as "spiders" 36) extending from the axle 34 to support the blades 32. In order to further reduce overall mass, the axle 34 and blade support members 36 further help concentrate the reel's mass in the cutting blades may include apertures (e.g. holes, etc. - not shown) in the spiders 36, and the spiders 36 may be formed from a low-density material (e.g. aluminum, etc.).

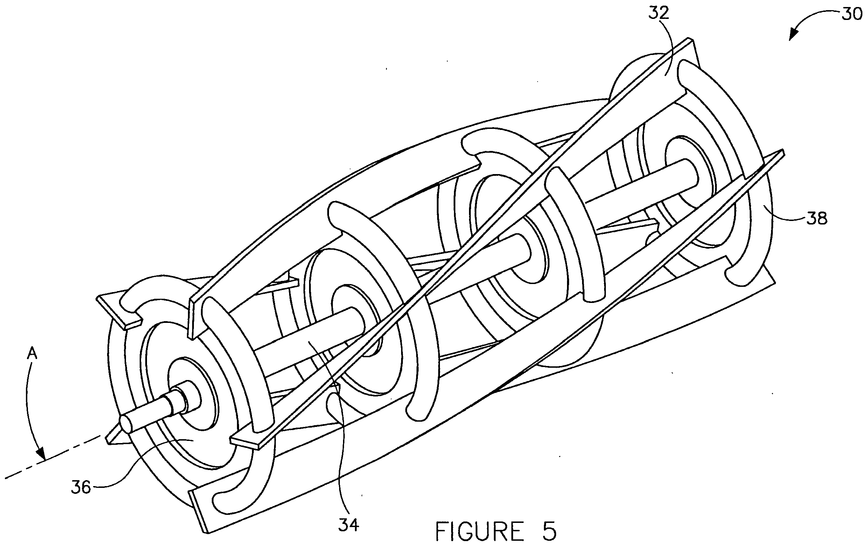

According to an alternative embodiment, the mass of the reel may be concentrated on some part other than the cutting blades of the reel. For example, the reel may include thin, lightweight blades and weights mounted separately near the periphery of the reel. Also, the blades may be mounted to a massive cylinder, itself mounted to the shaft, and providing a large area over which to distribute the mass distant from the axis of rotation. Further, ring weights (e.g. toroidal weights, etc,) 38 may be mounted just inside of the edge of the cutting blade, and oriented approximately parallel to the spiders (see FIGURE 5).

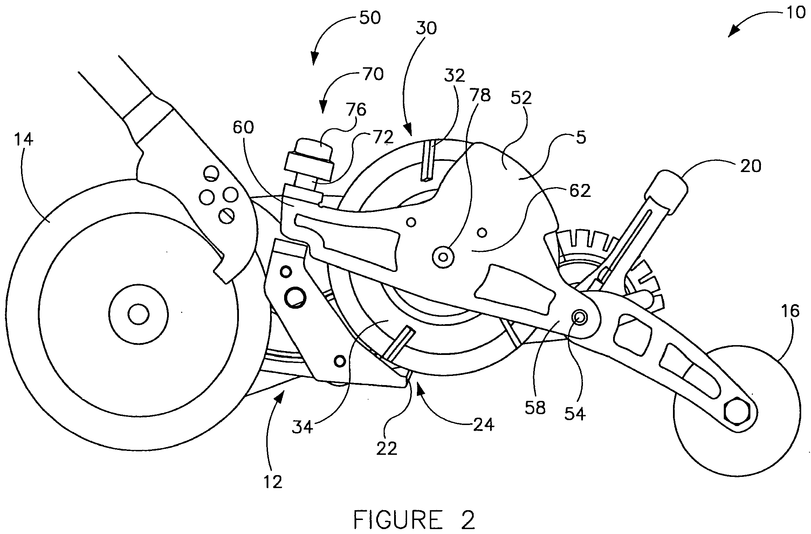

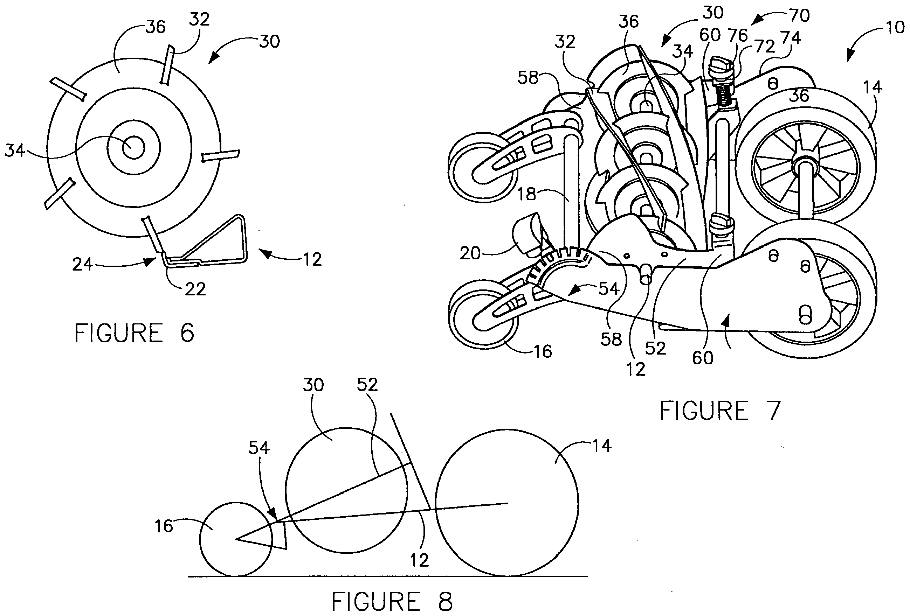

Referring now more particularly to FIGURES 1, 2, and 6-8, a cutting gap adjustment system 50 for setting and controlling the gap 24 between the cutting blades 32 of the high rotational inertia reel 30 and the bedknife 22 for a non-contact reel mower 10 are disclosed, according to an exemplary embodiment. The cutting gap 24 is shown more particularly in FIGURES 2 and 6 as the amount of space or clearance in a generally vertical direction between the cutting blades 32 of the reel 30 and the bedknife 22. However, the gap may be any desired amount of space or clearance having any suitable orientation depending on the location and relationship of the cutting blades and the bedknife with respect to one another. Although the cutting gap adjustment system is shown and described for a non-contact type reel mower, the system is also adaptable for use with a contact type reel mower.

The cutting gap adjustment system 50 controls the size or dimension of the gap 24 (if present) or the amount of contact pressure between the cutting edge of the reel blades and the stationary bedknife (i.e. the fixed, opposing blade mounted on the bottom of the mower that engages the reel cutting blades in a shearing relationship). In both cases, careful control of the relative position of the reel cutting blades and bedknife is desirable for optimal performance of the mower. For contact mowers, a contact pressure that is too high results in both excessive power being needed to drive the reel and accelerated wear of the cutting edges. In contrast, a contact pressure that is too light results in failure of the blades to cut properly. For non-contact reel mowers, a gap that is too large may result in a poor cut (or no cut at all), while contact between the cutting blades and bedknife tends to damage the cutting blades and bedknife. In both cases, the difference between optimal performance and poor performance is generally understood to be a matter of a several thousandths of an inch at the interface between the blades and the bedknife.

According to the illustrated embodiment, the reel 30 is movable relative to the main chassis 12 of the reel mower 10 to provide the desired adjustment of the gap 24 (or contact pressure in the case of a contact type mower). The reel 30 is supported by a pair of opposed reel carrier plates 52 disposed on opposite sides of the mower 10. Each reel carrier plate 52 is configured to pivot about a pivot point 54 disposed at a front end of the mower 10. The reel carrier plates 52 each include a forward end 58 and a rearward end 60, and a midportion 62. The forward end 58 of the plates 52 are pivotally coupled to the mower at pivot point 54. The pivot point 54 is shown by way of example to pivot about the cross member 18 for the front wheels 16, or as located coincident with the cross member 18, but may be arranged to pivot about any suitable point proximate the front end of the mower 10. As such, the reel carrier plates 52 are configured to operate as 'levers' to raise and lower the reel 30 by raising and lowering the rearward end 60 of the plates by an adjustment device 70 conveniently disposed on a top side of the mower 10.

The rearward end 60 of the reel carrier plates 52 are coupled to the adjustment device 70, which engages the main chassis 12 of the mower 10 and extends upwardly from the mower 10. The adjustment device 70 is operable to raise or lower the rearward end 60 of the reel carrier plates 52 to raise or lower the reel 30 as the forward end 58 of the reel carrier plates 52 pivot about the pivot points 54. According to one embodiment, the adjustment devices 70 each comprise a pair of substantially vertical threaded members 72 (e.g. screws, etc.) that may be adjusted (i.e. rotated about their axis) to raise and lower the reel carrier plates 52 relative to the chassis 12. The adjustment devices 70 are further shown to include springs 74 (shown for example as coil springs) that bias the rearward ends 60 of the reel carrier plates 52 upward against the threaded members 72 (e.g. against a shoulder, head or other suitable structure on the threaded member) to bias the reel carrier plates upward to an adjustment position established by the threaded members 72.

Referring further to FIGURES 2 and 6, as the reel carrier plates 52 are raised or lowered, the reel 30 is also raised or lowered relative to the bedknife 22 to adjust the gap 24 between the cutting blades 32 of the reel 30 and the bedknife 22. Each reel carrier plate 52 may be adjusted independently of the other to more precisely set and control the gap 24 (or contact pressure for a contact type mower). Placement of the adjustment device 70 proximate the top of the mower 10, is intended to enhance the adjustability and make operation of the cutting gap adjustment system 50 faster, simpler, and more reliable. Further, the top-mounted location of the adjustment device 70 provides quick and convenient access, encouraging a user to check the adjustment of the gap and speeding the adjustment process. The top mounted location is also intended to provide room for the use of ergonomic knobs 76 for use in turning the threaded members 74, which do not typically fit beneath a mower, thus providing tool-free adjustment capability for the cutting gap adjustment system 50.

According to an alternative embodiment, the reel carrier plates may be interconnected to permit adjustment of both reel carrier plates with a single (e.g. common, etc.) adjustment device. For example, a cross-member (or other substantially rigid framework) may be provided connecting the reel carrier plates to one another and a single adjustment device provided that operably engages the cross-member (or one of the reel carrier plates or framework) and the mower chassis, to adjust both reel carrier plates relative to the chassis and set the gap using a single adjustment operation, and also serves to maintain alignment of bearings 78 provided on opposite ends of the axle 34 for the reel 30. According to one embodiment, the bearings 78 are on (or within) the reel carrier plates 52 so that raising or lowering the rearward end 60 of the reel carrier plates 52 results in a desired change in elevation of the reel 30.

As shown further in FIGURES 2 and 8, the length of the reel carrier plates 52 are relatively long between the reel 30 and the adjustment device(s) 70 and relatively short between the reel 30 and the front pivot point 54, so that a 'coarse' adjustment of the threaded member 72 (corresponding to a relatively large elevation change at the rearward end 60 of the reel carrier plates 52) would result in a relatively small elevation change of the midportion 62 of the reel carrier plates 52 and the reel 30, and is intended to provide fine-tuning capability for the adjustment system. The motion-reducing nature of the reel carrier plates 52 that operate in the form of levers about a front pivot point 54 means that for a given pitch of the threaded member 72, a larger input motion is necessary to effect a given output at the reel 30, and is intended to reduce the sensitivity of the cutting gap adjustment system 50 to user "feel" and error.

According to one embodiment, the reel 30 may be mounted approximately at a midpoint of the reel carriers plates 52, in order to provide the smallest overall length for the mower 10, while still providing an approximate 2-to-1 reduction in motion from the adjustment device(s) 70 to the reel 30. The adjustment devices 70 also include a locking device to fix the threaded members in place after adjustment of the gap 24 has been set, and is intended to minimize the drift, misalignment or other unintended change of the gap 24 (or contact pressure for contact type mowers).

The adjustment device 70 may also include a device intended to automatically set the appropriate gap 24 for optimal cutting of a non-contact type mower. For example, a cam, detent, or other generally fixed-offset device (not shown) may be provided to cause a controlled amount of motion of the reel 30 after it has been adjusted into contact with the bedknife 22, after which the adjustment device 70 may be locked in place. For example, a lever and cam may be pivotally coupled to the chassis and operable to engage the rearward end of the carrier plates (or framework), so that after having set the reel cutting blades into contact with the bedknife, an operator may move the lever to engage the cam with the plate(s) to move the plates a pre-defined amount corresponding to a factory-preset gap position. According to one embodiment, the gap 24 between the cutting blades 32 and the bedknife 22 is less than approximately 0.5 mm, and more particularly less than approximately 0.1 mm, and the reel cutting blades and bedlrnife are heat-treated to a hardness above approximately 40 Rockwell C, and more particularly above approximately 45 Rockwell C. However, other suitable gap dimensions and cutting blade/bedknife hardness levels may be used as desired to suit a particular application.

According to an alternative embodiment, the adjustment device may omit the use of threaded members and include other adjustment features. For example, fine intermeshing toothed racks may be provided on each of the chassis and the rearward end of the reel carrier plate(s) that may be 'snapped' from one discrete position to another, corresponding to predefined gaps dimensions. Also, the rearward end of the reel carrier plates may be clamped into position with suitable clamps (e.g. bolts, over-center levers, etc.), that may be manually released to change the elevation or position of the reel and then tightened or engaged upon establishing the desired gap setting. Further, the reel carriers may be made wholly or partly flexible (using a material such as fiberglass, carbon fiber or spring steel portions, etc.), such that when the flexible members are flexed (e.g. bowed, etc.) by the adjustment device, the amount of 'arch' of the members would also change and thereby cause an increased or decreased gap between cutting blades and the bedknife. The reel carrier plate(s) is (are) provided at their rearward end with a spring-biased rotatable cam (e.g. coupled to the plates by a common shaft or the like) that engages the chassis so that rotation of the cam raises or lowers the reel a pre-determined amount. A suitable locking device (e.g. clamp, latch, travel-stop, etc.) may also be provided to maintain the reel in a fixed position once the desired gap had been set.

Generally, the bedknife of a reel mower is a relatively rigid and stout member, since its straightness tends to affect the ability of the mower to cut uniformly, particularly for non-contact type mowers. Many conventional mowers typically adjust the gap between the reel cutting blades and the bedknife by moving the bedknife, thus separating the bedknife from the mower chassis, and eliminating the ability of the bedknife to serve as a reinforcing element or other structural element of the mower chassis. In contrast, the gap adjustment feature of the present invention is intended to enhance the ease and accuracy of gap adjustment, while also permitting the bedknife to serve the additional purpose of functioning as a chassis brace to provide a more rigid structure without the added mass associated with additional structure or braces that are common in conventional reel mowers.

According to any exemplary embodiment, the cutting gap adjustment system 50 is mechanically simple, and allows for user adjustment of the gap 24 from the top of the mower 10 through a lever-type motion-reducing pivoted linkage to move the reel 30, without releasing the cutting blade reel or the bedknife) to free-float, which tends to make adjustment with a desired precision difficult without complex external fixtures. The system also allows the bedknife to serve as a chassis brace, reducing overall weight, complexity and cost for the mower.

It is also important to note that the construction and arrangement of the elements of the reel mower as shown schematically in the embodiments is illustrative only.

## Claims

1. A reel mower (10), comprising:
a frame (12) having a front end (18), a rear end, a pair of front wheels (16) mounted proximate the front end (18), and a pair of rear wheels (14) mounted proximate the rear end;
a reel (30) having an axle (34), a plurality of blades (32) helically disposed about the axis at a radial distance from the axis, and at least one blade support member (36) coupling the blades (32) to the axle (34);
a bedknife (22), the bedknife (22) mounted to the frame (12); and
an adjustment system (50) configured to move the reel (30) relative to the bedknife (22), the adjustment system (50) including a first reel carrier plate (52) and a second reel carrier plate (52) each having a first portion (54) pivotally coupled to the frame (12), and a second portion (62) rotatably supporting the axle (34), and a third portion (60) having an adjustment device (70) configured to couple the third portion (60) of the carrier plates (52) to the frame (12),
**characterized in that** the bedknife (22) provides a brace for the frame (12), and that the adjustment system (50) includes a spring device (74) biasing the reel carrier plates (52) into engagement with the adjustment device (70).

2. The reel mower of Claim 1 wherein the first portion (54) of the carrier plates (52) are pivotally coupled to the front end (18) of the frame (12), and the front wheels (16) are adjustably coupled to the front end (18) of the frame (12).

3. The reel mower of Claim 1 wherein the reel (30) concentrates mass in the plurality of blades (32).

4. The reel mower of Claim 1 wherein the reel (30) is mounted proximate a midpoint of the reel carrier plates (52) to provide an approximate 2-to-1 reduction in motion from the adjustment device (70) to the reel (30).

5. The reel mower of Claim 1 wherein the reel (30) is further defined as having a diameter of approximately 175 mm, and the plurality of blades are further defined as having a thickness of approximately 4.5 mm and a width of approximately 30 mm and a length of approximately 460 mm, resulting in reel inertia of at least 5,000,000 g*mm².

6. The reel mower of Claim 1 wherein the adjustment system (50) for moving the reel (30) relative to the fixed bedknife includes:
the first carrier plate (52) substantially opposite and spaced a distance from the second carrier plate (52), the first carrier plate (52) and the second carrier plate (52) each having a forward end (54) pivotally coupled proximate a forward end (18) of the mower, and a mid portion (62) having a bearing (78) disposed in the carrier plate (52) that rotatably supports the reel (30), and a rearward end; and
an adjustment device (70) disposed proximate the top of the mower and movably coupling the rearward end of the carrier plates (52) to a mower chassis (12).

7. The reel mower of Claim 6 wherein the adjustment device (70) further comprises a first adjustment device (70) coupled to the first carrier plate (52) and a second adjustment device (70) coupled to the second carrier plate (52), the first adjustment device (70) configured to move the rearward end of the first carrier plate (52), and the second adjustment device (70) configured to move the rearward end of the second carrier plate (52).

8. The reel mower of Claim 6 wherein movement of the adjustment device (70) at the rearward ends of the carrier plates (52) establishes an adjustable gap (24) between the reel (30) and the bedknife (22).

9. The reel mower of Claim 6 wherein the adjustment device (70) further includes a device to automatically set the gap between the reel (30) and the bedknife (22).

10. The reel mower of Claim 6 wherein the adjustment device (70) of the first carrier plate (52) and the adjustment device (70) of the second carrier plate (52) extend upwardly from the chassis (12).

11. The reel mower of Claim 10 wherein the adjustment device (70) of the first carrier plate (52) and the adjustment device (70) of the second carrier plate (52) each include a pair of vertical threaded members (72).

12. The reel mower of Claim 11 wherein the adjustment device (70) of the first carrier plate (52) and the adjustment device (70) of the second carrier plate (52) each further include a locking device to fix the carrier plates (52) in place.

13. The reel mower of Claim 11 wherein the adjustment device (70) further includes springs (74) to bias the rearward ends of the reel carrier plates (52) upward against the threaded members (72).

14. The reel mower of Claim 11 wherein the threaded members (72) include ergonomic knobs (76).

15. The reel mower of Claim 7 wherein movement of the adjustment device (70) at the rearward ends of the carrier plates (52) a first distance results in movement of the reel (30) by a second distance, the first distance being greater than the second distance.

## Patentansprüche

1. Spindelmäher (10) mit:
einem Rahmen (12) mit einem Vorderende (18), einem Hinterende, einem Paar von Vorderrädern (16), die nahe dem Vorderende (18) angebracht sind, und einem Paar von Hinterrädern (14), die nahe dem Hinterende angebracht sind,
einer Spindel (30) mit einer Achse (34), einer Mehrzahl von helixförmig um die Achse in radialem Abstand zu der Achse angeordnete Messern (32) und wenigstens einem Messerträgerteil (36), das die Messer (32) mit der Achse (34) verbindet,
einer Gegenschneide (22), wobei die Gegenschneide (22) an dem Rahmen (12) montiert ist, und
einem Einstellsystem (50), das dazu ausgestaltet ist, die Spindel (30) relativ zu der Gegenschneide (22) zu bewegen, wobei das Einstellsystem (50) eine erste Spindelträgerplatte (52) und eine zweite Spindelträgerplatte (52) aufweist, die jeweils einen ersten Bereich (54), der schwenkbar mit dem Rahmen (12) verbunden ist, und einem zweiten Bereich (62), in dem die Achse (34) drehbar gelagert ist, und einen dritten Bereich (60) mit einer Einstellvorrichtung (70) aufweist, die dazu ausgestaltet ist, um den dritten Bereich (60) der Trägerplatten (52) mit dem Rahmen (12) zu verbinden,
**dadurch gekennzeichnet, dass** die Gegenschneide (22) eine Strebe für den Rahmen (12) bildet und dass das Einstellsystem (50) eine Federvorrichtung (74) aufweist, die die Spindelträgerplatten (52) in Anlage an die Einstellvorrichtung (70) vorspannt.

2. Spindelmäher nach Anspruch 1, wobei der erste Bereich (54) der Trägerplatten (52) schwenkbar mit dem Vorderende (18) des Rahmens (12) gekoppelt sind und wobei die Vorderräder (16) einstellbar mit dem Vorderende (18) des Rahmens (12) gekoppelt sind.

3. Spindelmäher nach Anspruch 1, wobei die Spindel (30) Masse in der Mehrzahl von Messern (32) konzentriert.

4. Spindelmäher nach Anspruch 1, wobei die Spindel (30) nahe einem Mittelpunkt der Spindelträgerplatten (52) angebracht ist, um etwa eine zwei-zu-eins Reduktion in der Bewegung von der Einstellvorrichtung (70) zu der Spindel (30) zu schaffen.

5. Spindelmäher nach Anspruch 1, wobei die Spindel (30) weiter mit einem Durchmesser von etwa 175 mm definiert ist und die Mehrzahl von Messern weiter mit einer Dicke von etwa 4,5 mm und einer Breite von etwa 30 mm und einer Länge von etwa 460 mm definiert sind, was in einem Spindelträgheitsmoment von wenigstens 5.000.000 g × mm² resultiert.

6. Spindelmäher nach Anspruch 1, wobei das Einstellsystem (50) zum Bewegen der Spindel (30) relativ zu der feststehenden Gegenschneide aufweist:
die erste Trägerplatte (52) im Wesentlichen gegenüber und auf Abstand zu der zweiten Trägerplatte (52), wobei die erste Trägerplatte (52) und die zweite Trägerplatte (52) jede ein vorderes Ende (54), das schwenkbar nahe einem vorderen Ende (18) des Mähers gekoppelt ist, und einen Mittelbereich (62) mit einem in der Trägerplatte (52) angeordneten Lager, das die Spindel (30) drehbar lagert, und ein hinteres Ende aufweist, und
die Einstellvorrichtung (70), die nahe der Oberseite des Mähers angeordnet ist und das hintere Ende der Trägerplatten (52) beweglich mit einem Mäherrahmen (12) koppelt.

7. Spindelmäher nach Anspruch 6, wobei die Einstellvorrichtung (70) weiter eine erste Einstellvorrichtung (70), die mit der ersten Trägerplatte (52) gekoppelt ist, und eine zweite Einstellvorrichtung (70) aufweist, die mit der zweiten Trägerplatte (52) gekoppelt ist, wobei die erste Einstellvorrichtung (70) dazu gestaltet ist, um das hintere Ende der ersten Trägerplatte (52) zu bewegen, und wobei die zweite Einstellvorrichtung (70) dazu ausgestaltet ist, um das hintere Ende der zweiten Trägerplatte (52) zu bewegen.

8. Spindelmäher nach Anspruch 6, wobei Bewegung der Einstellvorrichtung (70) an den hinteren Enden der Trägerplatten (52) eine einstellbare Lücke (24) zwischen der Spindel (30) und der Gegenschneide (22) bildet.

9. Spindelmäher nach Anspruch 6, wobei die Einstellvorrichtung (70) weiter eine Vorrichtung aufweist, um automatisch die Lücke zwischen der Spindel (30) und der Gegenschneide (22) festzulegen.

10. Spindelmäher nach Anspruch 6, wobei die Einstellvorrichtung (70) der ersten Trägerplatte (52) und die Einstellvorrichtung (70) der zweiten Trägerplatte (52) von dem Rahmen (12) nach oben verlaufen.

11. Spindelmäher nach Anspruch 10, wobei die Einstellvorrichtung (70) der ersten Trägerplatte (52) und die Einstellvorrichtung (70) der zweiten Trägerplatte (52) jeweils ein Paar von vertikalen Gewindegliedern (72) aufweisen.

12. Spindelmäher nach Anspruch 11, wobei die Einstellvorrichtung (70) der ersten Trägerplatte (52) und die Einstellvorrichtung (70) der zweiten Trägerplatte (52) jeweils weiter eine Verriegelungsvorrichtung aufweisen, um die Trägerplatten (52) am Ort zu fixieren.

13. Spindelmäher nach Anspruch 11, wobei die Einstellvorrichtung (70) weiter Federn (74) aufweist, um die hinteren Enden der Spindelträgerplatten (52) nach oben gegen die Gewindeglieder (72) vorzuspannen.

14. Spindelmäher nach Anspruch 11, wobei die Gewindeglieder (72) jeweils einen ergonomischen Knauf (76) aufweisen.

15. Spindelmäher nach Anspruch 7, wobei Bewegung der Einstellvorrichtung (70) an den hinteren Enden der Trägerplatten (52) über eine erste Strecke in Bewegung der Spindel (30) über eine zweite Strecke resultiert, wobei die erste Strecke größer als die zweite Strecke ist.

## Revendications

1. Tondeuse à cylindre (10) comprenant :
un bâti (12) ayant une extrémité avant (18), une extrémité arrière, une paire de roues avant (16) montées à proximité de l'extrémité avant (18) et une paire de roues arrière (14) montées à proximité de l'extrémité arrière ;
un cylindre (30) ayant un essieu (34), une pluralité de lames (32) disposées de manière hélicoïdale autour de l'axe à une distance radiale de l'axe, et au moins un élément de support de lame (36) couplant les lames (32) à l'essieu (34) ;
un couteau fixe (22), le couteau fixe (22) étant monté sur le bâti (12) ; et
un système d'ajustement (50) configuré pour déplacer le cylindre (30) par rapport au couteau fixe (22), le système d'ajustement (50) comprenant une première plaque de support de cylindre (52) et une seconde plaque de support de cylindre (52), chacune ayant une première partie (54) couplée de manière pivotante au bâti (12) et une deuxième partie (62) supportant en rotation l'essieu (34), et une troisième partie (60) ayant un dispositif d'ajustement (70) configuré pour coupler la troisième partie (60) des plaques de support (52) au bâti (12),
**caractérisé en ce que** le couteau fixe (22) fournit une jambe de force pour le bâti (12) et **en ce que** le système d'ajustement (50) comprend un dispositif de ressort (74) sollicitant les plaques de support de cylindre (52) en mise en prise avec le dispositif d'ajustement (70).

2. Tondeuse à cylindre selon la revendication 1, dans laquelle la première partie (54) des plaques de support (52) est couplée de manière pivotante à l'extrémité avant (18) du bâti (12), et les roues avant (16) sont couplées de manière ajustable à l'extrémité avant (18) du bâti (12).

3. Tondeuse à cylindre selon la revendication 1, dans laquelle le cylindre (30) concentre la masse dans la pluralité de lames (32).

4. Tondeuse à cylindre selon la revendication 1, dans laquelle le cylindre (30) est monté à proximité d'un point central des plaques de support de cylindre (52) pour fournir une réduction d'approximativement 2 à 1 en mouvement, du dispositif d'ajustement (70) au cylindre (30).

5. Tondeuse à cylindre selon la revendication 1, dans laquelle le cylindre (30) est en outre défini comme ayant un diamètre d'approximativement 175 mm, et la pluralité de lames sont en outre définies comme ayant une épaisseur d'approximativement 4,5 mm et une largeur d'approximativement 30 mm et une longueur d'approximativement 460 mm, se traduisant par une inertie de cylindre d'au moins 5000000 g*mm².

6. Tondeuse à cylindre selon la revendication 1, dans laquelle le système d'ajustement (50) pour déplacer le cylindre (30) par rapport au couteau fixe comprend :
une première plaque de support (52) sensiblement opposée et espacée à une certaine distance de la seconde plaque de support (52), la première plaque de support (52) et la seconde plaque de support (52) ayant chacune une extrémité avant (54) couplée de manière pivotante à proximité d'une extrémité avant (18) de la tondeuse, et une partie centrale (62) ayant un palier (78) disposé dans la plaque de support (52) qui supporte en rotation le cylindre (30) et une extrémité arrière ; et
un dispositif d'ajustement (70) disposé à proximité de la partie supérieure de la tondeuse et couplant de manière mobile l'extrémité arrière des plaques de support (52) à un châssis de tondeuse (12).

7. Tondeuse à cylindre selon la revendication 6, dans laquelle le dispositif d'ajustement (70) comprend en outre un premier dispositif d'ajustement (70) couplé à la première plaque de support (72) et un second dispositif d'ajustement (70) couplé à la seconde plaque de support (52), le premier dispositif d'ajustement (70) étant configuré pour déplacer l'extrémité arrière de la première plaque de support (52) et le second dispositif d'ajustement (70) configuré pour déplacer l'extrémité arrière de la seconde plaque de support (52).

8. Tondeuse à cylindre selon la revendication 6, dans laquelle le mouvement du dispositif d'ajustement (70) au niveau des extrémités arrière des plaques de support (52) établit un espace ajustable (54) entre les cylindres (30) et le couteau fixe (52).

9. Tondeuse à cylindre selon la revendication 6, dans laquelle le dispositif d'ajustement (70) comprend en outre un dispositif pour déterminer automatiquement l'espace entre le cylindre (30) et le couteau fixe (22).

10. Tondeuse à cylindre selon la revendication 6, dans laquelle le dispositif d'ajustement (70) de la première plaque de support (52) et le dispositif d'ajustement (70) de la seconde plaque de support (52) s'étendent vers le haut à partir du châssis (12).

11. Tondeuse à cylindre selon la revendication 10, dans laquelle le dispositif d'ajustement (70) de la première plaque de support (52) et le dispositif d'ajustement (70) de la seconde plaque de support (52) comprennent chacun une paire d'éléments filetés verticaux (72).

12. Tondeuse à cylindre selon la revendication 11, dans laquelle le dispositif d'ajustement (70) de la première plaque de support (52) et le dispositif d'ajustement (70) de la seconde plaque de support (52) comprennent en outre un dispositif de blocage pour fixer les plaques de support (52) en place.

13. Tondeuse à cylindre selon la revendication 11, dans laquelle le dispositif d'ajustement (70) comprend en outre des ressorts (74) pour solliciter les extrémités arrière des plaques de support de cylindre (52) vers le haut contre les éléments filetés (72).

14. Tondeuse à cylindre selon la revendication 11, dans laquelle les éléments filetés (72) comprennent des boutons ergonomiques (76).

15. Tondeuse à cylindre selon la revendication 7, dans laquelle le mouvement du dispositif d'ajustement (70) au niveau des extrémités arrière des plaques de support (52) sur une première distance se traduit par le mouvement du cylindre (30) sur une seconde distance, la première distance étant supérieure à la seconde distance.
